# EUROPÄISCHE PATENTSCHRIFT

(11) **EP 3 740 398 B1**
(45) Veröffentlichungstag und Bekanntmachung des Hinweises auf die Patenterteilung: **20.10.2021**
(21) Anmeldenummer: 19723733.2
(22) Anmeldetag: 03.05.2019
(51) Int. Cl.: B60M 1/20

(54) **HÄNGERKLEMME FÜR WINDSCHIEFE OBERLEITUNGEN**
SUSPENSION CLAMP FOR INCLINED TROLLEY WIRES
BRIDE DE SUSPENSION POUR LIGNES AÉRIENNES GAUCHIES L'UNE PAR RAPPORT À L'AUTRE

(30) Priorität: 22.05.2018 DE 102018207998
(43) Veröffentlichungstag der Anmeldung: 25.11.2020
(73) Patentinhaber: Siemens Mobility GmbH, 81739 München (DE)
(72) Erfinder: RÜHL, Martin, 91054 Erlangen (DE); HAHN, Gunter, 91353 Hausen (DE); TERFLOTH, Sebastian, 91080 Uttenreuth (DE)
(86) Internationale Anmeldenummer: PCT/EP2019/061407
(87) Internationale Veröffentlichungsnummer: WO 2019/223983

(56) Entgegenhaltungen:
- EP-A1- 2 985 173
- EP-A2- 0 893 299
- US-A- 1 292 238
- US-A- 1 735 131

## Beschreibung

Die Erfindung betrifft eine Hängerklemme für windschiefe Oberleitungen mit einer Fahrdrahtklemme zum stromleitenden Anschluss eines Fahrdrahts und einer Hängerseilanschlussarmatur zum Anschluss eines Hängerseils, verbunden mit einem Hängerseilanschlussprofil.

Bei der Gestaltung von Fahrleitungssystemen für schienengebundene (z. B. Bahnanwendungen) und insbesondere auch nicht schienengebundene Systeme (z. B. eHighway) wurde bisher davon ausgegangen, dass der Stromabnehmer mit einer Schleifleiste den Fahrdraht von seiner Unterseite kontaktiert. Dies wird durch eine zulässige Seitenlage des Fahrdrahtes auf der Schleifleiste beschrieben, die bisher konstruktiv sichergestellt wurde. Insbesondere bei nicht schienengebundenen Systemen kann es aber durch seitliche Relativbewegung der Fahrzeuge oder der Oberleitung zu der Situation kommen, dass der Fahrdraht den vorgesehenen Kontaktbereich auf der Schleifleiste verlässt und sich in den seitlichen Grenzbereich bewegt. Dort wird der Fahrdraht nicht mehr ausschließlich von unten, sondern aufgrund der Neigung des seitlichen Stromabnehmerbereichs (oder vom Auflaufhorn) von der Seite beschliffen. Aus diesem Grund werden für entsprechende Systeme Lichträume oberhalb des Fahrdrahts festgelegt, die frei von Fahrleitungsbauteilen zu gestalten sind. Der Lichtraum wird ausgehend von der Fahrdrahtunterkante durch einen Anstellwinkel α gegenüber der Horizontalen beschrieben und einer Lichtraumhöhe H.

Über die Klemmrille des Fahrdrahts ist eine Vielzahl von Klemmen mit diversen Funktionen (Seiten- und Höhenlage des Fahrdrahts, Einspeisungen, etc.) auf dem Fahrdraht befestigt, wobei die Klemmen breiter sind als der Fahrdraht an seiner dicksten Stelle. Aufgrund dieses Überstandes kann es zur Kollision zwischen dem seitlichen Bereich des Stromabnehmers und den Klemmen an der Fahrleitung kommen, wenn die Neigung gegenüber der Horizontalen des seitlichen Bereichs des Stromabnehmers größer ist als die mögliche Neigung zwischen Tangente an der Fahrdrahtaußenkante und dem über den Fahrdraht hinausstehenden Teil der Klemme. Zudem können in bisherigen Lösungen die an den Klemmen befestigten Bauteile (Seitenhalter, Hängerseil, etc.) den Lichtraum verletzen.

In der US 1 292 238 A wird ein "duplex catenary pull-over" beschrieben, der sich auf eine "catenary trolley wire suspension" bezieht.

Des Weiteren ist in der EP 2 985 173 A ein "cantilever for an overhead line" beschrieben.

Hänger dienen in der Oberleitung zur Sicherstellung der Fahrdrahthöhenlage (z-Achse, Koordinatensystem für alle folgenden Achsenbezeichnungen) sowie in windschiefen Oberleitungen zusätzlich der Sicherstellung der Seitenlage (y-Achse). Bei Oberleitungen mit einer windschiefen Anordnung verlaufen Tragseil und Fahrdraht nicht senkrecht übereinander, d. h. nicht in der gleichen x-z-Ebene. Hänger leiten die Gewichtskraft (z-Achse) und Seitenzugskraft (y-Achse) des Fahrdrahts über je eine Anklemmstelle an Fahrdraht und Tragseil und ein dazwischen befindliches Hängerseil in das Tragseil ein. Bei windschiefen Oberleitungen ergibt sich ein resultierender Kraftvektor in der y-z-Ebene. Folglich sind die Anklemmpunkte der Hänger ebenfalls nicht lotrecht in derselben x-z-Ebene, sondern können eine Schrägstellung von bis zu 20° zur Horizontalebene (x-y-Ebene) einnehmen. Bei herkömmlichen Hängern verläuft das nicht biegesteife Hängerseil entsprechend des Vektors der resultierenden Hängerkraft nahezu als Gerade zwischen den beiden Anklemmpunkten und verletzt damit ab einer gewissen Neigung den freizuhaltenden Lichtraum. Dies geschieht, wenn die Neigung β des Hängerseils zur Horizontalen kleiner ist als die Neigung des Winkels a, der den Lichtraum des Stromabnehmers links und rechts des Fahrdrahts begrenzt.

Zudem wird durch die Kraftwirkungsrichtung und die Höhe des Angriffspunktes an der Klemme ein Verdrehmoment bei seitlicher Abzugsrichtung in den Fahrdraht eingeleitet. Das Verdrehmoment berechnet sich aus dem Anteil der Seitenzugkraft F_{Y} mal Abstand des Kraftangriffpunktes von der Fahrdrahtachse D : M = F_{Y} * D. Die am Fahrdraht befindliche Klemme wird aufgrund des Moments um die x-Achse gedreht und ragt damit aufgrund ihrer Formgebung noch weiter in den Lichtraum hinein als ohnehin schon. Durch die Drehung des Fahrdrahtes werden auch angrenzende Klemmen mitverdreht und verletzen dann ebenfalls den Lichtraum. Um dies zu vermeiden, wurden bisher spezielle Klemmen für Hänger für windschiefe Oberleitungen verwendet. Dabei wird ein Abzugsbügel in Richtung der resultierenden Hängerkraft F_{RES} ausgerichtet und die Kraft nahezu am Fuß der Klemme in den Fahrdraht eingeleitet (D minimal), sodass das Verdrehmoment des Fahrdrahtes aufgrund des deutlich kleineren D auch deutlich verkleinert und die Verdrehung minimiert wird. Die bisher verwendete Klemme kann jedoch nur in zwei diskreten Stufen ,30° und 60°, eingestellt werden, sodass der exakte Winkel nur angenähert werden kann und eine Verdrehung dadurch weiterhin, wenn auch geringer, möglich ist.

Bei dieser Lösung verläuft die Zugkraft jedoch weiterhin direkt zwischen Anklemmpunkten am Fahrdraht und Tragseil entsprechend der Resultierenden, sodass der Lichtraum verletzt wird, wenn die Schrägstellung des Hängers zu flach wird.

Die oben beschriebene Situation der zu übertragenden Kräfte gilt für den Idealfall und geht davon aus, dass die Resultierende in der y-z-Ebene liegt. Dieser Sollzustand wird bei Neuerrichtung der Anlage durch das Montagepersonal zuzüglich Montagetoleranzen hergestellt. Durch unterschiedliche Temperaturen und den Verschleiß des Fahrdrahtes können sich Fahrdraht und Tragseil im Laufe der Anlagenlebensdauer jedoch unterschiedlich ausdehnen, sodass der Hänger auch in x-Richtung schräg gestellt wird. Die Belastung des Hängers ist dann nicht mehr ausschließlich in der y-z-Ebene, sondern auch in der x-Ebene. Bei der bisherigen Lösung der Hängerklemme für windschiefe Oberleitungen ist der Abzugsbügel nur durch Drehung um die x-Achse einstellbar, nicht jedoch um die z-Achse. Er kann sich nicht entsprechend der tatsächlichen Zugkraftrichtung des Hängerseils um die z-Achse ausrichten. Dadurch wird ein zusätzliches Verdrehmoment um die z-Achse eingeleitet, das die Klemme und ihren Bügel mechanisch belastet, sodass er verformt werden kann.

Hänger sind Bauteile, welche bei Oberleitungen am häufigsten vorkommen (alle drei Meter). Die Montage der Hänger sowie eine Nachregulierung bei Verschiebung von Fahrdraht und Tragseil in x-Richtung sind mit verfügbarkeitsreduzierenden Sperrzeiten verbunden. Insbesondere bei Baustellen für die Elektrifizierung über Autobahnen (eHighway) sind Sperrpausen mit hohen Kosten und Staubildung verbunden. Dementsprechend ist eine einfache und schnelle Montage aller Klemmen von hoher Bedeutung. Zudem muss auf Autobahnen vermieden werden, dass Bauteile bei der Montage auf die Fahrbahn fallen können, da diese sonst durch darüberfahrende Fahrzeuge aufgewirbelt und bei nachfolgenden Fahrzeugen zu Schäden führen können.

Hänger müssen in ihrer gewöhnlichen Ausführung Dauer- und Kurzschlussströme übertragen. Der Strompfad muss diese Ströme sicher tragen können und darf infolge der Strombelastung nicht versagen, um ein Herabfallen von Bauteilen oder Absinken der Oberleitung in den Fahrbahnbereich zu verhindern. Bei den bisher verwendeten Hängerklemmen für windschiefe Oberleitungen kann eine stromfeste Verbindung nur durch eine zusätzliche Speiseklemme zur Aufnahme der Stromschlaufe, welche neben der eigentlichen Hängerklemme angebracht wird, gewährleistet werden.

Es lassen sich für Hänger für windschiefe Oberleitungen also folgende Anforderungen identifizieren: Der Lichtraum im Winkel α seitlich zum Fahrdraht soll bis zu einer Höhe H freigehalten werden, um eine Kollision des Stromabnehmers mit dem Hänger für windschiefe Oberleitungen (Klemmkörper und Verbindungseil) zu verhindern. Eine mögliche Verdrehung des Fahrdrahts um die x-Achse soll ausgeschlossen werden oder so gering wie möglich gehalten werden, um die zuvor genannten Anforderungen weiterhin für die Hängerklemme für windschiefe Oberleitungen und angrenzende, andere Klemmen einzuhalten. Alle betrieblichen Kräfte sollen übertragen werden, d. h. neben planmäßig vorgesehenen Kräften in y-z―Richtung auch Kräfte in x-Richtung. Dauer- und Kurzschlussströme sollen sicher übertragen werden. Eine schnelle und einfache Montage des vollständig vorkonfektionierten Bauteils ohne Demontage in einzelne Kleinteile soll möglich sein. Bei der Montage soll vermieden werden, dass durch das Montagepersonal eine falsche Justage/Einstellung erfolgen kann.

Die bisherigen Anforderungen an Hänger für windschiefe Oberleitungen waren ohne Berücksichtigung des freizuhaltenden Lichtraums definiert und können folglich für solche Anwendungen nicht eingesetzt werden. Durch die nur in zwei Stufen einstellbare Abzugsrichtung der Resultierenden wird die Verdrehung des Fahrdrahts zwar verringert, aber nicht vermieden. Belastungen in x-Richtung wurden bislang vernachlässigt bzw. eine Verbiegung des Aufhängebügels in Kauf genommen. Für die Übertragung der Ströme war eine zusätzliche Speiseklemme vorhanden, da die eigentliche Klemme keinen Anschluss für einen definierten Strompfad ermöglicht. Die bisherige Hängerklemme für windschiefe Oberleitungen wurde bei Montage vor Ort auf einen der beiden erforderlichen Winkel eingestellt. Die korrekte Einstellung unterlag der Qualifikation des Personals.

Die Aufgabe der Erfindung besteht nun darin, eine Hängerklemme für windschiefe Oberleitungen bereitzustellen, die die genannten Anforderungen erfüllt.

Erfindungsgemäß wird eine Hängerklemme für windschiefe Oberleitungen mit einer Fahrdrahtklemme zum stromleitenden Anschluss eines Fahrdrahts und einer Hängerseilanschlussarmatur zum Anschluss eines Hängerseils, verbunden mit einem Hängerseilanschlussprofil zur Verfügung gestellt, bei der das Hängerseilanschlussprofil biegesteif ausgeführt ist und einen in einem mit einem Fahrdraht verbundenen Zustand der Hängerklemme oberhalb der Fahrdrahtklemme befindlichen, freizuhaltenden Lichtraum umgreift, wobei das Hängerseilanschlussprofil einen Abschnitt aufweist, der senkrecht zu einer Längsrichtung des Fahrdrahts und um seine Längsrichtung drehbar angeordnet ist. In anderen Worten ausgedrückt, ergibt sich, beziehungsweise befindet sich, wenn die Hängerklemme über die Fahrdrahtklemme mit dem Fahrdraht verbunden ist, ein Lichtraum oberhalb der Fahrdrahtklemme, welcher freizuhalten ist. Dieser freizuhaltende Lichtraum wird vorteilhaft von dem Hängerseilanschlussprofil umgriffen und mithin freigehalten.

Mit einem derartigen Design wird der Lichtraum freigehalten, weil das Hängerseilanschlussprofil oberhalb der im Lichtraum freizuhaltenden Höhe abgewinkelt ist, sodass es den Anklemmpunkt am Fahrdraht und den Anklemmpunkt am Hänger nicht auf geradem, direktem Weg verbindet, sondern durch seine biegesteife Ausführung umgreifen kann. Durch dieses Design wird die technische Umsetzung einer Elektrifizierung z. B. auf Autobahnen (eHighway) ermöglicht. Die Einhaltung des Lichtraums ermöglicht auch eine Kostenreduzierung für Pantographen bei eHighways, wobei Kollisionen von Wippenelementen/Hörnern des Pantographen an Elementen der Oberleitung verhindert werden können.

Der Lichtraum bezeichnet darin einen Raum, der in Oberleitungssystemen oberhalb des Fahrdrahts vorgesehen und festgelegt ist. Dieser festgelegte Raum (der Lichtraum) ist frei von Fahrleitungsbauteilen zu halten (freizuhaltender Lichtraum). Der freizuhaltende Lichtraum wird dabei ausgehend von einer Unterkante des Fahrdrahts durch einen Anstellwinkel gegenüber der Horizontalen beschrieben sowie einer im Einzelfall festzulegenden Lichtraumhöhe. Der Lichtraum im Anstellwinkel seitlich zum Fahrdraht soll bis zu der Lichtraumhöhe freigehalten werden, um eine Kollision des Stromabnehmers mit der Hängerklemme für windschiefe Oberleitungen (Klemmkörper und Verbindungseil) zu verhindern.

Des Weiteren ist der Abschnitt des Hängerseilanschlussprofils z. B. über einen Gewindebolzen um seine Längsrichtung (z-Achse) drehbar angeordnet. So können in x-Richtung auftretende Kräfte zu einer gewünschten Ausrichtung des Hängerseilanschlussprofils führen und nicht zu einem Drehmoment mit entsprechender Biegebelastung des abgewinkelten Profils.

Dabei ist bevorzugt, dass die Fahrdrahtklemme biegesteif mit dem Hängerseilanschlussprofil verbunden ist, und das Hängerseilanschlussprofil den Lichtraum unter einem Winkel von 80° bis 100°, insbesondere 90°, umgreift. Hierdurch wird wiederum erreicht, dass einerseits das Hängerseilanschlussprofil insgesamt biegesteif ausgeführt ist, um den Lichtraum freizulassen. Andererseits wird auch die Fahrdrahtklemme biegesteif mit dem Hängerseilanschlussprofil verbunden. Dabei umgreift das Hängerseilanschlussprofil den Lichtraum unter einem Winkel zwischen 80° und 100°, vorzugsweise 90°. Hierdurch bleibt das Hängerseilanschlussprofil zuverlässig außerhalb des Lichtraums angeordnet.

Es ist bevorzugt, dass eine Position der Hängerseilanschlussarmatur in einer zum Fahrdraht parallelen Ebene stufenlos entlang des Hängerseilanschlussprofils verstellbar ist.

Die Hängerseilanschlussarmatur wird entsprechend der erforderlichen Neigung der Hängerklemme für windschiefe Oberleitungen stufenlos auf dem Hängerseilanschlussprofil positioniert, sodass der Anklemmpunkt am Fahrdraht und der Anschlusspunkt des Hängerseils auf der Kraftwirkungslinie der Resultierenden liegen. Somit kann die aus einem Hängerberechnungsprogramm berechnete Hängerschrägstellung genau eingestellt und eine Verdrehung des Fahrdrahts vollständig vermieden werden.

Es ist bevorzugt, dass die Hängerseilanschlussarmatur in einer ersten Ausrichtung relativ zu dem Hängerseilanschlussprofil oder einer zu der ersten Ausrichtung um 180° gedrehten zweiten Ausrichtung relativ zum dem Hängerseilanschlussprofil auf diesem montierbar ist.
Durch den außermittigen Anschluss des Hängerseils an der Hängerseilanschlussarmatur kann ein großer Winkelbereich bei einer möglichst kurzen Länge des Hängerseilanschlussprofils gewährleistet werden. Die Hängerseilanschlussarmatur wird dazu auf dem Profil um 180° gedreht montiert. Vorteilhafterweise wird dann die Hängerseilanschlussarmatur sowie das Hängerseilanschlussprofil nur einseitig beschriftet, was einer falschen Einstellung vorbeugt.

Es ist bevorzugt, dass die Hängerseilanschlussarmatur eine Klemmvorrichtung zum stromleitenden Anschluss eines Hängerseils an dem Fahrdraht aufweist.

Das Hängerseil kann direkt an der Hängerseilanschlussarmatur befestigt werden. Eine Schlaufe des Hängerseils wird direkt an der Hängerseilanschlussarmatur eingeklemmt und stellt eine stromfeste Verbindung zwischen dem Hängerseil und dem Fahrdraht her, ohne dass das Ende der Schlaufe durch Spezialwerkzeug verpresst oder konfektioniert werden muss. Auf eine zusätzliche Speiseklemme kann verzichtet werden. Weil das Hängerseil im Gegensatz zur bisher verwendeten Speiseklemme und anderen, gebräuchlichen Lösungen mit Kabelschuhen direkt in die Anschlussarmatur eingeklemmt werden kann, sind keine weiteren Arbeitsschritte zum Verpressen des stromfesten Anschlusses erforderlich, und zusätzliche Komponenten wie Kabelschuhe und Spezialwerkzeug werden nicht benötigt. Die Kosten werden insgesamt reduziert.

Bei der Projektierung wird die Hängerlänge und -neigung exakt berechnet. Vor Montage der Hängerklemme für windschiefe Oberleitungen kann diese vorkonfektioniert werden. Das erforderliche Hängerseil wird entsprechend der erforderlichen Länge abzüglich der bereits durch Hängerseilanschlussprofil und Hängerseilanschlussarmatur überbrückten Länge vorkonfektioniert, d. h. mit Kauschen in einer Öffnung der Hängerseilanschlussarmatur verpresst. Die überstehende Hängerseilschlaufe für den Stromanschluss wird in die Aufnahme der Hängerseilanschlussarmatur eingeführt. Die erforderliche Hängerneigung wird eingestellt, indem die Hängerseilanschlussarmatur an der erforderlichen Stelle in der korrekten Einbaurichtung positioniert wird. Durch Anziehen einer Schraube ist die Hängerseilanschlussarmatur fixierbar und die Hängerseilschlaufe stromfest eingeklemmt.

Durch Hinzufügen einer Tragseilhängerklemme auf der anderen Seite der windschiefen Hängerklemme entsteht eine vorkonfektionierte Hängerklemme. Auf der Baustelle muss diese lediglich auf den Fahrdraht gesetzt und durch Anziehen der beiden Fahrdrahtklemmenschrauben am Fahrdraht befestigt werden. Die Montage am Tragseil kann je nach eingesetzter Tragseilhängerklemme ebenfalls ohne Demontage erfolgen.

Schließlich ist auch bevorzugt, dass auf einer ersten Seite und/oder einer gegenüberliegenden zweiten Seite des Hängerseilanschlussprofils eine Skalierung zur Anzeige einer Einbaulage der Hängerseilanschlussarmatur angebracht ist. Hierdurch können Fehler des Montagepersonals vermieden werden und die Montagedauer insgesamt gesenkt werden. Eine zuverlässige Einstellung ist sichergestellt.

Bevorzugt ist die Hängerseilanschlussarmatur dazu ausgebildet, dass Hängerseil stromfest zu befestigen. Auf eine weit herausragende Schraube-Mutter-Verbindung sowie auf einen Kabelschuh für die stromfeste Verbindung kann in einer derartigen Ausführung vorteilhaft verzichtet werden.

Vorzugsweise ist die Hängerseilanschlussarmatur über eine Klemmverbindung mit dem Hängerseilanschlussprofil verbunden. In einer derartigen Ausführung ist die zuvor beschriebene stromfeste Verbindung besonders sicher und stabil realisiert.

Die oben beschriebenen Eigenschaften, Merkmale und Vorteile dieser Erfindung sowie die Art und Weise, wie diese erreicht werden, werden klarer und deutlicher verständlich im Zusammenhang mit der folgenden Beschreibung der Ausführungsbeispiele, die im Zusammenhang mit den Zeichnungen näher erläutert werden. Es zeigen:
- Figur 1: eine Hängerklemme für windschiefe Oberleitungen nach dem Stand der Technik,
- Figur 2: eine erfindungsgemäße Hängerklemme für windschiefe Oberleitungen mit einer Hängerseilanschlussarmatur in zwei unterschiedlichen Positionen, und
- Figur 3: eine erfindungsgemäße Hängerklemme für windschiefe Oberleitungen.

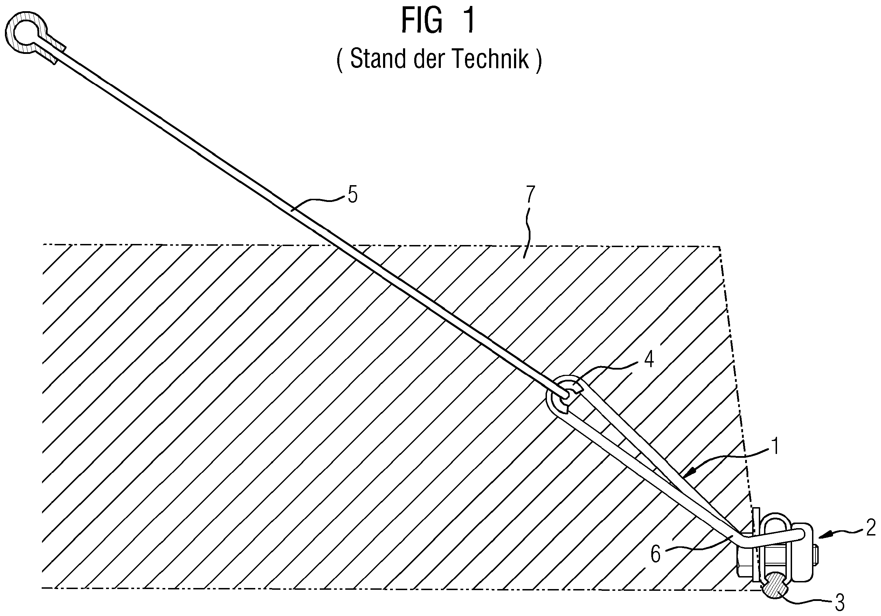

In der Figur 1 ist eine Hängerklemme 1 für windschiefe Oberleitungen nach dem Stand der Technik gezeigt. Diese weist eine Fahrdrahtklemme 2 auf, die mit dem Fahrdraht 3 in Eingriff steht. Weiter weist die Hängerklemme 1 für windschiefe Oberleitungen eine Hängerseilanschlussarmatur 4 auf. Die Hängerseilanschlussarmatur 4 ist im Eingriff mit einem Hängerseil 5 und an einem Hängerseilanschlussprofil 6 befestigt. Es ist deutlich zu erkennen, dass die Hängerklemme 1 für windschiefe Oberleitungen in einen Lichtraum 7 oberhalb des Fahrdrahts 3 hineinragt. Hierdurch kann es zu den oben bereits ausführlich beschriebenen Nachteilen der Hängerklemmen 1 für windschiefe Oberleitungen nach dem Stand der Technik kommen.

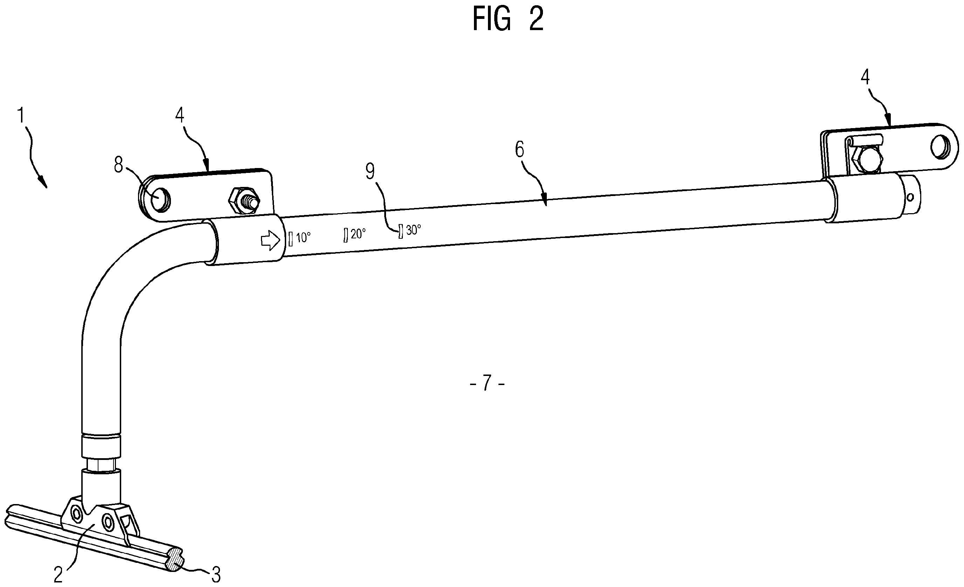

In Figur 2 ist eine Hängerklemme 1 für windschiefe Oberleitungen nach einer Ausführungsform der Erfindung gezeigt. Gleiche Bezugszeichen bezeichnen dabei gleiche technische Merkmale.

Die Hängerklemme 1 für windschiefe Oberleitungen weist dabei ein rechtwinkelig gebogenes und biegesteifes Hängerseilanschlussprofil 6 auf, das mit einer ebenfalls biegesteifen Verbindung zu der Fahrdrahtklemme 2 und der stufenlos verstellbaren Hängerseilanschlussarmatur 4 zum Anschluss an das Hängerseil 5 (hier nicht dargestellt) an das Hängerseilanschlussprofil 6 verbunden ist.

Die Hängerseilanschlussarmatur 4 wird entsprechend der erforderlichen Neigung der Hängerklemme 1 für windschiefe Oberleitungen stufenlos auf dem Hängerseilanschlussprofil 6 positioniert, sodass der Anklemmpunkt am Fahrdraht 3 und der Anschlusspunkt des Hängerseils 5 in der Hängerseilanschlussarmatur 4 auf der Kraftwirkungslinie der Resultierenden liegen. Somit kann die aus einem Hängerberechnungsprogramm berechnete Hängerschrägstellung genau eingestellt und eine Verdrehung des Fahrdrahts 3 vollständig vermieden werden. Der Lichtraum 7 wird freigehalten, weil das Hängerseilanschlussprofil 6 oberhalb der im Lichtraum 7 freizuhaltenden Höhe abgewinkelt ist, sodass es den Anklemmpunkt am Fahrdraht 3 und den Anklemmpunkt an der Hängerklemme 1 für windschiefe Oberleitungen nicht auf geradem, direktem Weg verbindet, sondern durch seine biegesteife Ausführung umgreifen kann.

Hier ist ebenso zu erkennen, dass die Hängerseilanschlussarmatur 4 außermittig in Bezug auf das Hängerseilanschlussprofil 6 angeordnet ist. Die Hängerseilanschlussarmatur 4 ist dabei in dem gezeigten Ausführungsbeispiel in zwei unterschiedlichen Positionen dargestellt, die relativ zueinander um 180° gedrehte Hängerseilanschlussarmaturen 4 zeigen.

Das Hängerseil 5 kann direkt an einer Klemmvorrichtung 8 der Hängerseilanschlussarmatur 4 befestigt werden. Eine Schlaufe des Hängerseils 5 wird direkt an der Hängerseilanschlussarmatur 4 eingeklemmt und stellt eine stromfeste Verbindung zwischen Hängerseil 5 und Fahrdraht 3 her, ohne dass das Ende der Schlaufe durch Spezialwerkzeug verpresst oder konfektioniert werden muss. Auf eine zusätzliche Speiseklemme kann verzichtet werden.

Bei der Projektierung wird die Hängerlänge und -neigung exakt berechnet. Vor Montage der Hängerklemme 1 für windschiefe Oberleitungen kann diese vorkonfektioniert werden. Das erforderliche Hängerseil 5 wird entsprechend der erforderlichen Länge abzüglich der bereits durch Hängerseilanschlussprofil 6 und Hängerseilanschlussarmatur 4 überbrückten Länge vorkonfektioniert, d. h. mit Kauschen in der Öffnung der Hängerseilanschlussarmatur 4 verpresst. Die überstehende Hängerseilschlaufe für den Stromanschluss wird in die Klemmvorrichtung 8 der Hängerseilanschlussarmatur 4 eingeführt. Die erforderliche Hängerneigung wird eingestellt, indem die Hängerseilanschlussarmatur 4 an der erforderlichen Stelle in der korrekten Einbaurichtung (links oder rechts dargestellte Hängerseilanschlussarmatur 4) positioniert wird. Neben der Einbaurichtung der Hängerseilanschlussarmatur 4 ist insbesondere die korrekte Ausrichtung auf einer Skalierung 9 für die korrekte Funktionsweise erforderlich. Die Skalierung 9 wird unten näher erläutert werden. Durch Anziehen einer Schraube wird die Hängerseilanschlussarmatur 4 fixiert und die Hängerseilschlaufe stromfest eingeklemmt.

Durch Hinzufügen einer Tragseilklemme (nicht dargestellt) auf der anderen Seite der Hängerklemme 1 für windschiefe Oberleitungen entsteht eine vorkonfektionierte Hängerklemme 1 für windschiefe Oberleitungen. Auf der Baustelle muss diese lediglich auf den Fahrdraht 3 gesetzt und durch Anziehen der beiden Fahrdrahtklemmschrauben am Fahrdraht 3 befestigt werden. Die Montage am Tragseil kann je nach eingesetzter Tragseilhängerklemme ebenfalls ohne Demontage erfolgen.

Schließlich ist die Skalierung 9 auf dem Hängerseilanschlussprofil 6 angeordnet. Diese ist für die jeweilige Einbaulage der Hängerseilanschlussarmatur 4 eindeutig auf einer Seite angebracht und erleichtert so die Montage. Durch einseitiges Anbringen eines Pfeils und der Skalierung 9 ist die korrekte Einbaurichtung eindeutig und verwechslungsfrei zuzuordnen. Dies stellt eine zuverlässige Einstellung der Hängerneigung sicher und vermeidet versehentliche Fehleinstellungen.

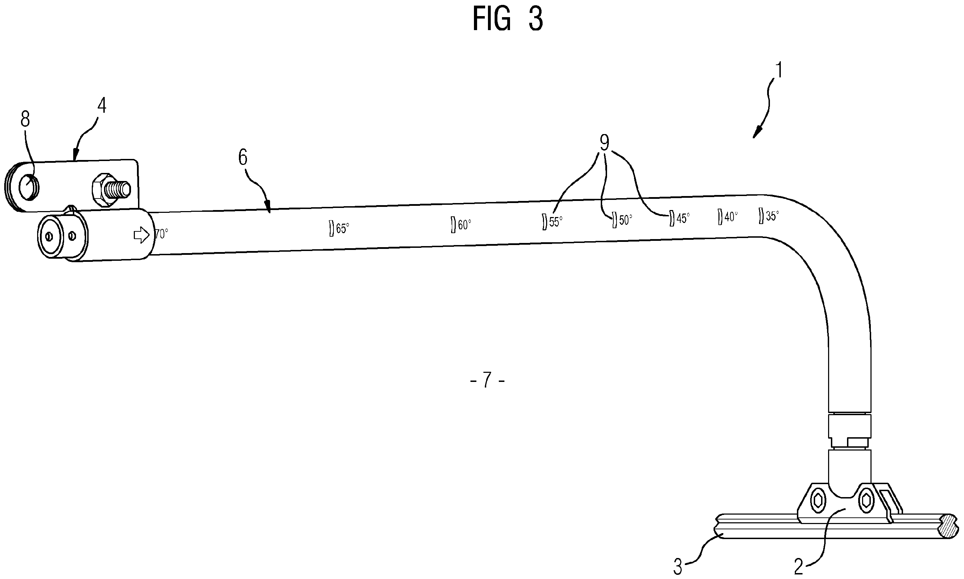

In Figur 3 sind dieselben Merkmale mit denselben Bezugszeichen versehen und dargestellt. Hier ist eine Ansicht gezeigt, in der nur eine Hängerseilanschlussarmatur 4 dargestellt ist. Der Abschnitt des Hängerseilanschlussprofils 6 unmittelbar oberhalb der Fahrdrahtklemme 2 ist um seine Längserstreckung drehbar mittels eines Gewindebolzens gelagert. Hierdurch werden zusätzlich auftretende Seitenkräfte auf die Hängerklemme 1 für windschiefe Oberleitungen vermieden.
Obwohl die Erfindung im Detail durch bevorzugte Ausführungsbeispiele näher illustriert und beschrieben wurde, so ist die Erfindung nicht durch die offenbarten Beispiele eingeschränkt und andere Variationen können vom Fachmann hieraus abgeleitet werden, ohne den durch die beiliegenden Ansprüche bestimmten Schutzumfang der Erfindung zu verlassen.

### Bezugszeichenliste

- 1: Hängerklemme
- 2: Fahrdrahtklemme
- 3: Fahrdraht
- 4: Hängerseilanschlussarmatur
- 5: Hängerseil
- 6: Hängerseilanschlussprofil
- 7: Lichtraum
- 8: Klemmvorrichtung
- 9: Skalierung

## Patentansprüche

1. Hängerklemme (1) für windschiefe Oberleitungen mit
- einer Fahrdrahtklemme (2) zum stromleitenden Anschluss eines Fahrdrahts (3), und
- einer Hängerseilanschlussarmatur (4) zum Anschluss eines Hängerseils (5), verbunden mit
- einem Hängerseilanschlussprofil (6), wobei
- das Hängerseilanschlussprofil (6) biegesteif ausgeführt ist und
- einen in einem mit einem Fahrdraht (3) verbundenen Zustand der Hängerklemme (1) oberhalb der Fahrdrahtklemme (2) befindlichen, freizuhaltenden Lichtraum (7) umgreift,
**dadurch gekennzeichnet, dass**
das Hängerseilanschlussprofil (6) einen Abschnitt aufweist, der senkrecht zu einer Längsrichtung des Fahrdrahts (3) und um seine Längsrichtung drehbar angeordnet ist.

2. Hängerklemme (1) für windschiefe Oberleitungen nach Anspruch 1, wobei die Fahrdrahtklemme (2) biegesteif mit dem Hängerseilanschlussprofil (6) verbunden ist, und das Hängerseilanschlussprofil (6) den Lichtraum unter einem Winkel von 80° bis 100°, insbesondere 90°, umgreift.

3. Hängerklemme (1) für windschiefe Oberleitungen nach Anspruch 1 oder 2, wobei eine Position der Hängerseilanschlussarmatur (4) in einer zum Fahrdraht (3) parallelen Ebene stufenlos entlang des Hängerseilanschlussprofils (6) verstellbar ist.

4. Hängerklemme (1) für windschiefe Oberleitungen nach einem der Ansprüche 1 bis 3, wobei die Hängerseilanschlussarmatur (4) in einer ersten Ausrichtung relativ zu dem Hängerseilanschlussprofil (6) oder einer zu der ersten Ausrichtung um 180° gedrehten zweiten Ausrichtung relativ zu dem Hängerseilanschlussprofil (6) auf diesem montierbar ist.

5. Hängerklemme (1) für windschiefe Oberleitungen nach einem der Ansprüche 1 bis 4, wobei die Hängerseilanschlussarmatur (4) eine Klemmvorrichtung (8) zum stromleitenden Anschluss des Hängerseils (5) an dem Fahrdraht (3) aufweist.

6. Hängerklemme (1) für windschiefe Oberleitungen nach einem der Ansprüche 1 bis 5, wobei auf einer ersten Seite und/oder einer gegenüberliegenden zweiten Seite des Hängerseilanschlussprofils (6) eine Skalierung (9) zur Anzeige einer Einbaulage der Hängerseilanschlussarmatur (4) angebracht ist.

7. Hängerklemme (1) für windschiefe Oberleitungen nach einem der vorhergehenden Ansprüche, wobei die Hängerseilanschlussarmatur (4) dazu ausgebildet ist, das Hängerseil (5) stromfest zu befestigen.

8. Hängerklemme (1) für windschiefe Oberleitungen nach Anspruch 7, wobei die Hängerseilanschlussarmatur (4) über eine Klemmverbindung mit dem Hängerseilanschlussprofil (6) verbunden ist.

## Claims

1. Suspension clamp (1) for inclined trolley wires with
- a contact wire clamp (2) for conductive connection of a contact wire (3) and
- a suspension cable connection fitting (4) for connection of a suspension cable (5), connected with
- a suspension cable connection profile (6), wherein
- the suspension cable connection profile (6) is designed to be rigid and
- a clearance (7) which is to be kept free and is located above the contact wire clamp (2) when the suspension clamp (1) is connected to a contact wire (3),
**characterised in that**
the suspension cable connection profile (6) has a section which is arranged at right angles to a longitudinal direction of the contact wire (3) and so as to be rotatable about its longitudinal direction.

2. Suspension clamp (1) for inclined trolley wires according to claim 1, wherein the contact wire clamp (2) is connected with the suspension cable connection profile (6) in a rigid manner, and the suspension cable connection profile (6) surrounds the clearance at an angle of 80° to 100°, in particular 90°.

3. Suspension clamp (1) for inclined trolley wires according to claim 1 or 2, wherein a position of the suspension cable connection fitting (4) can be gradually adjusted along the suspension cable connection profile (6) in a plane parallel to the contact wire (3).

4. Suspension clamp (1) for inclined trolley wires according to one of claims 1 to 3, wherein in a first alignment relative to the suspension cable connection profile (6) or in a second alignment relative to the suspension cable connection profile (6) which is rotated about 180° in relation to the first alignment, the suspension cable connection fitting (4) can be mounted hereupon.

5. Suspension clamp (1) for inclined trolley wires according to one of claims 1 to 4, wherein the suspension cable connection fitting (4) has a clamping device (8) for the conductive connection of the suspension cable (5) to the contact wire (3).

6. Suspension clamp (1) for inclined trolley wires according to one of claims 1 to 5, wherein a scaling (9) for displaying an installation position of the suspension cable connection fitting (4) is attached to a first side and/or an opposite second side of the suspension cable connection profile (6).

7. Suspension clamp (1) for inclined trolley wires according to one of the preceding claims, wherein the suspension cable connection fitting (4) is embodied to fasten the suspension cable (5) in a current-carrying manner.

8. Suspension clamp (1) for inclined trolley wires according to claim 7, wherein the suspension cable connection fitting (4) is connected to the suspension cable connection profile (6) by way of a clamping connection.

## Revendications

1. Pince (1) de suspension pour des lignes de contact gauches, comprenant
- une pince (2) de fil de contact pour la connexion conductrice de courant d'un fil (3) de contact, et
- une armature (4) de connexion d'un câble de suspension pour la connexion d'un câble (5) de suspension, reliée à
- un profilé (6) de connexion d'un câble de suspension,
- le profilé (6) de connexion d'un câble de suspension étant résistant à la flexion et
- entourant, dans un état de la pince (1) de suspension relié au fil (3) de contact un espace (7) ambiant maintenu libre en se trouvant au-dessus de la pince (2) de ligne de contact,
**caractérisée en ce que** le profilé (6) de connexion d'un câble de suspension a une partie, qui est perpendiculaire à une direction longitudinale du fil (3) de contact et qui est montée tournante autour de sa direction longitudinale.

2. Pince (1) de suspension pour des lignes de contact gauches suivant la revendication 1, dans laquelle la pince (2) de ligne de contact est reliée de manière à résister à la flexion au profilé (6) de connexion d'un câble de suspension et le profilé (6) de connexion d'un câble de suspension enserre l'espace ambiant suivant un angle de 80° à 100°, notamment de 90°.

3. Pince (1) de suspension pour des lignes de contact gauches suivant la revendication 1 ou 2, dans laquelle une position de l'armature (4) de connexion d'un câble de suspension est réglable le long du profilé (6) de connexion d'un câble de suspension en continu dans un plan parallèle au fil (3) de contact.

4. Pince (1) de suspension pour des lignes de contact gauches suivant l'une des revendications 1 à 3, dans laquelle l'armature (4) de connexion d'un câble de suspension peut être montée sur le profilé de connexion d'un câble de suspension dans une première direction par rapport au profilé (6) de connexion d'un câble de suspension ou dans une deuxième direction à 180° de la première direction par rapport au profilé (6) de connexion d'un câble de suspension.

5. Pince (1) de suspension pour des lignes de contact gauches suivant l'une des revendications 1 à 4, dans laquelle l'armure (4) de connexion d'un câble de suspension a un système (8) de serrage pour la connexion conductrice de courant du câble (5) de suspension au fil (3) de contact.

6. Pince (1) de suspension pour des lignes de contact gauches suivant l'une des revendications 1 à 5, dans laquelle d'un premier côté et/ou d'un deuxième côté opposé du profilé (6) de connexion d'un câble de suspension est monté une graduation (9) d'indication d'une position de montage de l'armure (4) de connexion d'un câble de suspension.

7. Pince (1) de suspension pour des lignes de contact gauches suivant l'une des revendications précédentes, dans laquelle l'armature (4) de connexion d'un câble de suspension est constituée pour fixer le câble (5) de suspension d'une manière apte à supporter le courant.

8. Pince (1) de suspension pour des lignes de contact gauches suivant la revendication 7, dans laquelle l'armature (4) de connexion d'un câble de suspension est reliée au profilé (6) de connexion d'un câble de suspension par un serrage.
